# EUROPEAN PATENT SPECIFICATION

(11) **EP 1 833 860 B1**
(45) Date of publication and mention of the grant of the patent: **02.12.2009**
(21) Application number: 05854238.2
(22) Date of filing: 15.12.2005
(51) Int. Cl.: C08F 214/18, C08F 214/22, C08F 214/26

(54) **FLUOROELASTOMERS HAVING LOW GLASS TRANSITION TEMPERATURE**
FLUORELASTOMERE MIT NIEDRIGER GLASÜBERGANGSTEMPERATUR
FLUOROELASTOMERES A BASSE TEMPERATURE DE TRANSITION VITREUSE

(30) Priority: 20.12.2004 US 637589 P; 16.11.2005 US 280024
(43) Date of publication of application: 19.09.2007
(73) Proprietor: DuPont Performance Elastomers L.L.C., Wilmington, DE 19809 (US)
(72) Inventor: HUNG, Ming-Hong, Wilmington, DE 19803 (US); TANG, Phan, Linh, West Chester, PA 19382 (US)
(74) Representative: Heinemann, Monica
(86) International application number: PCT/US2005/045475
(87) International publication number: WO 2006/068923

(56) References cited:
- US-A- 4 126 588
- US-A- 4 418 186
- US-A- 4 513 128
- US-A- 4 789 717
- US-A- 5 401 818

## Description

### FIELD OF THE INVENTION

This invention relates to fluoroelastomers having low glass transition temperatures, and in particular to fluoroelastomers containing copolymerized units of a perfluorovinylpolyether that is derived from a trimer or tetramer of hexafluoropropylene oxide.

### BACKGROUND OF THE INVENTION

Elastomeric fluoropolymers (i.e. fluoroelastomers) exhibit excellent resistance to the effects of heat, weather, oil, solvents and chemicals. Such materials are commercially available and are most commonly copolymers of vinylidene fluoride (VF₂) with hexafluoropropylene (HFP) and, optionally, tetrafluoroethylene (TFE). Other known fluoroelastomers include copolymers of TFE with a perfluoro(alkyl vinyl ether) such as perfluoro(methyl vinyl ether) (PMVE), copolymers of TFE with propylene (P) and, optionally VF₂, and copolymers of ethylene (E) with TFE and PMVE. Often, these fluoroelastomers also contain copolymerized units of a cure site monomer to facilitate vulcanization. While these copolymers have many desirable properties, including low compression set and excellent processability, their low temperature flexibility is not adequate for all end use applications. One particularly desirable improvement would be a reduction in glass transition temperature (T_{g}) with an accompanying extension of service temperature to lower temperatures. T_{g} is often used as an indicator of low temperature flexibility because polymers having low glass transition temperatures maintain elastomeric properties at low temperatures.

U.S. Patent No. 5,268,405 discloses fluoroelastomers blended with a perfluoropolyether in order to reduce the T_{g} of the composition. However, when such compositions are exposed to high temperatures, the perfluoropolyethers tend to be fugitive. As the level of perfluoropolyether in the compositions decreases, the T_{g} reverts to that of compositions containing no perfluoropolyether.

In order to lower the T_{g} of fluoroelastomers, others have copolymerized into the elastomer chain a perfluoro(alkyl vinyl ether) having more than one -C-O-C- sequence. For example, U.S. Patent No. 4,513,128 discloses fluoroelastomers containing 5 to 50 mole percent copolymerized units of perfluorovinylpolyether having the formula CF₂=CFO-[CF₂CF(CF₃)O]ₙR_{f} wherein R_{f} is a C₁₋₁₂ perfluoroalkyl group and n is an integer from 3 to 30. Such fluoroelastomers have a T_{g} between -15°C and -100°C. Polyethers having an n value of 0 to 2 are said to have very little effect on T_{g}. The glass transition temperature decreases with increasing level of copolymerized perfluorovinylpolyether units and with increased values of n. However, it is difficult to copolymerize moderate or high levels of perfluorovinylpolyether units into the fluoroelastomer due to the poor solubility of the polyethers in water. Chlorofluorocarbons such as F-113 may be employed as a polymerization solvent. However, such solvents have environmental problems due to their ozone depletion potential. Also, incorporation or conversion of perfluorovinylpolyether units into the elastomer is less in a chlorofluorocarbon solvent than it would be in an emulsion polymerization process if the polyether could be sufficiently emulsified.

U.S. Patent No. 6,730,760 discloses an emulsion polymerization process for making fluoroelastomers containing 10-60 mole percent of a perfluorovinyl ether of the formula CF₂=CF[O(CF₂)ₙ]ₘ(OCF₂)ₓOR_{f}, wherein n is an integer from 1 - 6, m is an integer from 1 - 3, x an integer from 0 - 3 and R_{f} is a C₁₋₆ perfluoroalkyl group. The perfluorovinyl ether is preemulsified with a surfactant prior to copolymerization with the comonomers. However, it is difficult to manufacture the latter perfluorovinyl ether. Typically, direct fluorination or electrochemical fluorination must be employed.

### SUMMARY OF THE INVENTION

It has been surprisingly discovered that the glass transition temperature of fluoroelastomers may be significantly reduced when a high level, i.e. 10 - 60 mole percent, of a certain perfluorovinylpolyether is copolymerized into the fluoroelastomers. The perfluorovinylpolyether has the formula CF₂=CFO-[CF₂CF(CF₃)O]ₙCF₂CF₂CF₃ wherein n is an integer equal to 1 or 2. Such olefins are referred to hereinafter as the hexafluoropropylene oxide trimer or tetramer, respectively. It has also been discovered that such fluoroelastomers may be manufactured in an emulsion polymerization process wherein the perfluorovinylpolyether is first emulsified with surfactant prior to polymerization with gaseous comonomer.

Accordingly, the present invention is directed to a process for preparation of a perfluoroelastomer comprising:
A) emulsifying a mixture comprising i) a perfluorovinylpolyether selected from the group consisting of a) hexafluoropropylene oxide trimer olefin, b) hexafluoropropylene oxide tetramer olefin, and c) mixtures thereof; ii) surfactant and iii) water to form an emulsified perfluorovinylpolyether; and
B) copolymerizing said emulsified perfluorovinylpolyether with at least one gaseous fluoromonomer selected from the group consisting of vinylidene fluoride and tetrafluoroethylene to form a fluoroelastomer having a glass transition temperature of less than -10°C as determined by differential scanning calorimetry in heating mode with a heating rate of 10°C per minute, inflection point of transition.

The invention is also directed to a fluoroelastomer comprising copolymerized units of
A. 30 to 76 mole percent vinylidene fluoride;
B. 10 to 60 mole percent units of a perfluorovinylpolyether selected from the group consisting of i) hexafluoropropylene oxide trimer olefin, ii) hexafluoropropylene oxide tetramer olefin, and iii) mixtures thereof; and
C. 5 to 50 mole percent units of at least one fluorine-containing monomer different from A) and B).

The invention is also directed to a fluoroelastomer comprising copolymerized units of
A. 20 to 85 mole percent tetrafluoroethylene;
B. 5 to 45 mole percent units of at least one monomer selected from the group consisting of a perfluoro(alkyl vinyl ether), a fluorinated vinyl ether, propylene and ethylene; and
C. 10 to 60 mole percent units of a perfluorovinylpolyether selected from the group consisting of i) hexafluoropropylene oxide trimer olefin, ii) hexafluoropropylene oxide tetramer olefin, and iii) mixtures thereof.

### DETAILED DESCRIPTION OF THE INVENTION

All fluoroelastomers of this invention contain between 10 and 60 (preferably 20 to 50) mole percent copolymerized units of a perfluorovinylpolyether (PVPE) based on hexafluoropropylene oxide (HFPO). The perfluorovinylpolyether may be a trimer (CF₂=CFOCF₂CF(CF₃)O-CF₂CF₂CF₃), a tetramer (CF₂=CFO[CF₂CF(CF₃)O]₂-CF₂CF₂CF₃), or a mixture thereof. Preferably, the trimer is employed. Such perfluorovinylpolyethers may readily be synthesized by the method disclosed in U.S. Patent 4,487,903 or in the Journal of Fluorine Chemistry, vol. 106, pp. 13-24 (2000).

One type of fluoroelastomer which may be employed in the compositions of this invention is based on vinylidene fluoride (VF₂). In addition to copolymerized units of 10 to 60 mole percent units of the perfluorovinylpolyether and 30 to 76 mole percent units of VF₂, this type of fluoroelastomer contains 5 to 50 mole percent copolymerized units of at least one other fluorine-containing monomer different from VF₂ and the PVPE. Examples of such monomers include, but are not limited to hexafluoropropylene (HFP), tetrafluoroethylene (TFE), fluorinated vinyl ethers (FVE) and perfluoro(alkyl vinyl) ethers (PAVE) such as perfluoro(methyl vinyl ether). In addition, the fluoroelastomers may optionally contain copolymerized units of a hydrocarbon olefin such as ethylene (E) or propylene (P).

Another type of fluoroelastomer which may be employed in this invention is based on tetrafluoroethylene (TFE). In addition to copolymerized units of 10 to 60 mole percent of the perfluorovinylpolyether and 20 to 85 mole percent of TFE, this type of fluoroelastomer contains 5 to 45 mole percent copolymerized units of at least one monomer selected from the group consisting of a perfluoro(alkyl vinyl ether), preferably perfluoro(methyl vinyl ether); a fluorinated vinyl ether; propylene and ethylene. Optionally, the fluoroelastomer may contain up to 30 mole percent vinylidene fluoride.

Fluorinated vinyl ethers (FVE) suitable for use as monomers in the fluoroelastomers employed in this invention include those of the formula

CF₂=CFO-(CF₂)ₘ-(CH₂)ₙ-[O(CF₂)ₓ]_{y}-O-A (I)

where m is an integer between 0 and 4; n is an integer between 0 and 2; x is an integer between 1 and 3; y is an integer between 0 and 6; and A is selected from the group consisting of C₁-C₄ perfluoroalkyl groups, C₁-C₆ perfluoroalkoxy groups, and C₁-C₄ alkyl groups containing between 0 and 8 fluorine atoms.

Perfluoro(alkyl vinyl ethers) (PAVE) suitable for use as monomers include those of the formula

CF₂=CFO(R_{f}O)ₙ(R_{f}O)ₘR_{f} (II)

where R_{f} and R_{f} are different linear or branched perfluoroalkylene groups of 2-6 carbon atoms, m and n are independently 0-10, and R_{f} is a perfluoroalkyl group of 1-6 carbon atoms.

A preferred class of perfluoro(alkyl vinyl ethers) includes compositions of the formula

CF₂=CFO(CF₂CFXO)ₙR_{f} (III)

where X is F or CF₃, n is 0-5, and R_{f} is a perfluoroalkyl group of 1-6 carbon atoms. A most preferred class of perfluoro(alkyl vinyl ethers) includes those ethers wherein n is 0 or 1 and R_{f} contains 1-3 carbon atoms. Examples of such perfluorinated ethers include perfluoro(methyl vinyl ether) (PMVE) and perfluoro(propyl vinyl ether) (PPVE). Other useful monomers include compounds of the formula

   CF₂=CFO[(CF₂)ₘCF₂CFZO]ₙR_{f} (IV)

   where R_{f} is a perfluoroalkyl group having 1-6 carbon atoms, m = 0 or 1, n = 0-5, and Z = F or CF₃. Preferred members of this class are those in which R_{f} is CF₃, m = 1, n= 1, and Z = F; and R_{f} is C₃F₇, m = 0, and n = 1.

Additional perfluoro(alkyl vinyl ether) monomers include compounds of the formula

CF₂=CFO[(CF₂CF{CF₃}O)ₙ(CF₂CF₂CF₂O)ₘ(CF2)ₚ]CₓF₂ₓ₊₁ (V)

where m and n independently = 0-10, p = 0-3, and x = 1-5. Preferred members of this class include compounds where n = 0-1, m = 0-1, and x = 1.

Additional examples of useful perfluoro(alkyl vinyl ethers) include

CF₂=CFOCF₂CF(CF₃)O(CF₂₀)ₘCₙF₂ₙ₊₁ (VI)

where n = 1-5, m = 1-3, and where, preferably, n = 1.

The fluoroelastomers employed in the compositions of this invention may also, optionally, contain a cure site for facilitating crosslinking. When present in the elastomers of the invention, cure sites are typically at a level of from 0.1 to 3 mole percent.

Suitable cure sites for crosslinking by organic peroxide/polyfunctional coagent curing systems include, but are not limited to bromine atoms, iodine atoms, or a combination thereof. Such cure sites may be introduced to the fluoroelastomer polymer chain by polymerization in the presence of a bromine- or iodine-containing chain transfer agent (U.S. Patent No. 4,243,770), e.g. 1,6-diiodoperfluorohexane. Cure sites may also be introduced by copolymerization of the fluoroelastomer with cure site monomers that contain a bromine or iodine atom such as fluorinated olefins or fluorinated vinyl ethers. Such cure site monomers are well known in the art (e.g. U.S. Patent Nos. 4,214,060; 5,214,106; and 5,717,036). Specific examples include, but are not limited to bromotrifluoroethylene (BTFE); 4-bromo-3,3,4,4-tetrafluorobutene-1 (BTFB); and 4-iodo-3,3,4,4-tetrafluorobutene-1 (ITFB). Bis-olefins may also be employed as cure site monomers in peroxide curable fluoroelastomers (U.S. Patent No. 5,585,449).

Suitable cure sites for crosslinking by polyhydroxy curing systems (e.g. bisphenol AF, diaminobisphenol AF) include, but are not limited to trifluoroethylene; 3,3,3-trifluoropropene-1; 1,2,3,3,3-pentafluoropropylene; 1,1,3,3,3-pentafluoropropylene; and 2,3,3,3-tetrafluoropropene.

Suitable cure sites for crosslinking by organotin; diaminobisphenol AF; 3,3'-diamonobenzidinene; or ammonia generating curatives (e.g. urea) include, but are not limited to comonomers such as nitrile group containing fluorovinyl ethers or nitrile group containing fluoroolefins. Examples include perfluoro(8-cyano-5-methyl-3,6-dioxa-1-octene) (8-CNVE) and the nitrile-containing cure site monomers disclosed in U.S. Patent No. 6,211,319 B1.

Specific examples of fluoroelastomers suitable for use in the compositions of this invention include, but are not limited to elastomers comprising copolymerized units selected from the group consisting of a) 30-76% VF₂/10-50% HFP/ 10-60% PVPE, b) 30-76% VF₂/5-50% HFP/5-30% TFE/10-60% PVPE, c) 30-76% VF₂/10-60% PMVE/10-60% PVPE, d) 30-76% VF₂/5-60% PMVE/5-30% TFE/10-60% PVPE, e) 10-30% VF₂/20-40% TFE/10-40% P/10-60% PVPE; f) 20-40% TFE/20-40% P/10-60% PVPE; g) 10-30% E/20-40% TFE/10-20% PMVE/10-60% PVPE and h) 20-45% TFE/20-45% PMVE/10-60% PVPE. All percentages in fluoroelastomers a) - h) are mole percentages based on the total moles of copolymerized comonomer units. These elastomers may further comprise at least one type of cure site as described above.

The preferred method for manufacturing the fluoroelastomers of this invention is emulsion polymerization so that conversion is high and chlorofluorocarbon solvents are not necessary. However, the perfluorovinylpolyether comonomer employed in the fluoroelastomers of this invention is not very soluble in water. In order to incorporate sufficient copolymerized units of the PVPE into the fluoroelastomer and lower the elastomer's T_{g} to less than -10°C, the PVPE should be emulsified prior to introduction of gaseous monomers and initiator to the reactor.

In a preferred process, a mixture comprising i) a PVPE selected from the group consisting of a) hexafluoropropylene oxide trimer olefin, b) hexafluoropropylene oxide tetramer olefin, and c) mixtures thereof; ii) a surfactant and iii) water is first emulsified. A high shear mixing device facilitates the formation of a suitable emulsion. The emulsified PVPE mixture does not contain gaseous comonomer. The mixture may further contain other ingredients such as a cure site monomer, pH buffer (e.g. sodium phosphate dibasic heptahydrate), and a fluorinated solvent such as a fluorinated alcohol (e.g. hexafluoroisopropanol) to assist in the emulsification of the perfluorovinylpolyether. The maximum droplet size of the perfluorovinylpolyether is preferably less than 1 micron.

The surfactant employed in the process of the above process may be a hydrocarbon surfactant or a fluorosurfactant. Preferably a fluorosurfactant is employed. Specific examples of suitable surfactants include alkyl sulfonates such as sodium octyl sulfonate and sodium dodecyl sulfonate; alkyl sulfates such as sodium lauryl sulfate and sodium decyl sulfate; alkyl carboxylates such as sodium caprylate and sodium stearate; nonionic surfactants such as nonylphenolpoly(ethylene oxide) and alkylpoly(ethylene oxide); perfluorinated carboxylic acids such as perfluorooctanoic acid and its salts, especially the ammonium salt; partially fluorinated sulfonic acids such as tridecafluorohexylethyl sulfonic acid and its salts; and partially fluorinated carboxylic acids such as 3,3,4,4-tetrahydroundecafluorooctanoic acid and its salts. The amount of surfactant used to emulsify the PVPE is typically 0.1 to 10 (preferably 1 to 3) weight percent based on the total weight of the PVPE mixture.

The resulting emulsified PVPE is then copolymerized in a conventional emulsion polymerization process with at least one gaseous fluoromonomer selected from the group consisting of vinylidene fluoride and tetrafluoroethylene to form a fluoroelastomer having a glass transition temperature of less than -10°C as determined by differential scanning calorimetry in heating mode with a heating rate of 10°C per minute, inflection point of transition. Optionally, other fluoromonomers such as hexafluoropropylene, chlorotrifluoroethylene, fluorovinyl ethers , perfluoro(alkyl vinyl ethers) (e.g. perfluoro(methyl vinyl ether)), cure site monomers, or hydrocarbon olefins (e.g. ethylene or propylene) may also be present in the reactor during copolymerization. The surfactant employed in the emulsion polymerization process may be the same or different from the surfactant employed in the emulsification of the PVPE. An inorganic peroxide such as a persulfate salt (e.g. ammonium persulfate) is typically used to initiate polymerization.

The fluoroelastomers of the present invention are useful in production of gaskets, tubing, seals and other molded components. Such articles are generally produced by compression molding a compounded formulation of the elastomer, a curing agent and various additives, curing the molded article, and then subjecting it to a post cure cycle. The cured parts have excellent low temperature flexibility and processability as well as excellent thermal stability and chemical resistance. They are particularly useful in applications such as seals and gaskets requiring a good combination of oil resistance, fuel resistance and low temperature flexibility, for example in fuel injection systems, fuel line connector systems and in other seals for high and low temperature automotive uses.

The invention is now illustrated by certain embodiments wherein all parts and percentages are by weight unless otherwise specified.

### EXAMPLES

### Example 1

A polymer of the invention was prepared by a semi-batch emulsion polymerization process, carried out at 60°C in a well-stirred reaction vessel. An emulsion of 1200 g of deionized, deoxygenated water, 30 g of ammonium perfluorooctanoate, 7 g of sodium phosphate dibasic heptahydrate, and 140 g of HFPO tetramer olefin (CF₂=CFO[CF₂CF(CF₃)O]₂-CF₂CF₂CF₃) was prepared by passing the ingredients through a Microfluidizer® high shear processor (available from Microfluidics, a division of MFIC corp.) twice at about 103 MPa. This emulsion was charged to a 2-liter reactor. The reactor was heated to 60°C and then pressurized to 1.0 MPa with TFE (tetrafluoroethylene). A 27.4 ml aliquot of a 0.001 wt.% ammonium persulfate and 0.005 wt.% sodium phosphate dibasic heptahydrate initiator aqueous solution was then added. TFE was supplied to the reactor to maintain a pressure of 1.0 MPa throughout the polymerization. The initiator solution was fed continuously at 0.5 ml/hour through the end of the reaction period. After a total of 60 g TFE had been supplied to the reactor, monomer addition was discontinued and the reactor was purged of residual monomer. The total reaction time was 3 hours. The resulting fluoroelastomer latex was coagulated by addition of an aqueous aluminum sulfate solution and the filtered fluoroelastomer was then washed with deionized water. The polymer crumb was dried for two days at 60°C. The product, composed of 76.1 mol.% TFE and 23.9 mol.% HFPO tetramer olefin, was an amorphous fluoroelastomer having a glass transition temperature of -25°C, as determined by differential scanning calorimetry (heating mode, 10°C/minute, inflection point of transition).

### Example 2

A polymer of the invention was prepared by a semi-batch emulsion polymerization process, carried out at 60°C in a well-stirred reaction vessel. An emulsion of 1200 g of deionized, deoxygenated water, 30 g of ammonium perfluorooctanoate, 6 g of sodium phosphate dibasic heptahydrate, and 128 g of HFPO trimer olefin (CF₂=CFOCF₂CF(CF₃)O-CF₂CF₂CF₃) was prepared by passing the ingredients through a Microfluidizer® twice at about 103 MPa. The emulsion was then charged to a 2-liter reactor. The reactor was heated to 60°C and then pressurized to 1.0.MPa with TFE. A 164 ml aliquot of a 0.001 wt.% ammonium persulfate and 0.005 wt.% sodium phosphate dibasic heptahydrate initiator aqueous solution was then added. TFE was supplied to the reactor to maintain a pressure of 1.0 MPa throughout the polymerization. The initiator solution was fed continuously at 3.0 ml/hour through the end of the reaction period. After 0.7 g TFE had been reacted, curesite monomer 8CNVE (CF₂=CFOCF₂CF(CF₃)O-CF₂CF₂CN) was fed to the reactor at a rate of 0.38 ml 8CNVE to 10 g of TFE. After a total of 60 g TFE had been supplied to the reactor, monomer addition was discontinued and the reactor was purged of residual monomer. The total reaction time was 5 hours. The resulting fluoroelastomer latex was coagulated by addition of an aqueous aluminum sulfate solution and the filtered fluoroelastomer was then washed with deionized water. The polymer crumb was died for two days at 60°C. The product, composed of 76.9 mol.% TFE, 22.0 mol.% HFPO trimer olefin and 1.0 mol.% 8CNVE, was an amorphous fluoroelastomer having a glass transition temperature of -17°C, as determined by differential scanning calorimetry (heating mode, 10°C/minute, inflection point of transition).

### Example 3

A polymer of the invention was prepared by a semi-batch emulsion polymerization process, carried out at 60°C in a well-stirred reaction vessel. An emulsion of 1200 g of deionized, deoxygenated water, 30 g of ammonium perfluorooctanoate, 5.5 g of sodium phosphate dibasic heptahydrate, and 110 g of HFPO tetramer olefin (CF₂=CFO[CF₂CF(CF₃)O)₂-CF₂CF₂CF₃) was prepared by passing the ingredients through a Microfluidizer® twice at about 103 MPa. The emulsion was then charged to a 2-liter reactor. The reactor was heated to 60°C and then pressurized to 1.4 MPa with a monomer mixture of 40 wt.% TFE and 60 wt.% VF₂ (vinylidene fluoride). A 54.7 ml aliquot of a 0.001 wt.% ammonium persulfate and 0.005 wt.% sodium phosphate dibasic heptahydrate initiator aqueous solution was then added. A monomer mixture of 33.3 wt.% TFE and 66.7 wt.% VF₂ was supplied to the reactor to maintain a pressure of 1.4 MPa throughout the polymerization. The initiator solution was fed continuously at 1.0 ml/hour through the end of the reaction period. After a total of 90 g monomer mixture had been supplied to the reactor, monomer addition was discontinued and the reactor was purged of residual monomer. The total reaction time was 9 hours. The resulting fluoroelastomer latex was coagulated by addition of an aqueous aluminum sulfate solution arid the filtered fluoroelastomer was then washed with deionized water. The polymer crumb was dried for two days at 60°C. The product, composed of 26.7 mol.% TFE, 63.0 mol.% VF₂ and 10.4 mol.% HFPO tetramer olefin, was an amorphous fluoroelastomer having a glass transition temperature of -33°C, as determined by differential scanning calorimetry (heating mode, 10°C/minute, inflection point of transition).

### Example 4

A polymer of the invention was prepared by a semi-batch emulsion polymerization process, carried out at 60°C in a well-stirred reaction vessel. An emulsion of 1200 g of deionized, deoxygenated water, 30 g of ammonium perfluorooctanoate, 7 g of sodium phosphate dibasic heptahydrate, and 123 g of HFPO trimer olefin (CF₂=CFOCF₂CF(CF₃)O-CF₂CF₂CF₃) was prepared by passing the ingredients through a Microfluidizer® twice at about 103 MPa. The emulsion was charged to a 2-liter reactor. The reactor was heated to 60°C and then pressurized to 1.0 MPa with a monomer mixture of 74 wt.% TFE and 26 wt.% PMVE (perfluoro(methyl vinyl ether)). A 27.4 ml aliquot of a 0.001 wt.% ammonium persulfate and 0.005 wt.% sodium phosphate dibasic heptahydrate initiator aqueous solution was then added. The same monomer mixture was supplied to the reactor to maintain a pressure of 1.0 MPa throughout the polymerization. The initiator solution was fed continuously at 0.5 ml/hour through the end of the reaction period. After a total of 57 g monomer mixture had been supplied to the reactor, monomer addition was discontinued and the reactor was purged of residual monomer. The total reaction time was 10 hours. The resulting fluoroelastomer latex was coagulated by addition of an aqueous aluminum sulfate solution and the filtered fluoroelastomer was then washed with deionized water. The polymer crumb was dried for two days at 60°C. The product, composed of 83.6 mol.% TFE, 4.2 mol.% PMVE and 12.2 mol.% HFPO trimer olefin, was an amorphous fluoroelastomer having a glass transition temperature of -16°C, as determined by differential scanning calorimetry (heating mode, 10°C/minute, inflection point of transition).

## Claims

1. A process for preparation of a fluoroelastomer comprising:
A) emulsifying a mixture comprising i) a perfluorovinylpolyether selected from the group consisting of a) hexafluoropropylene oxide trimer olefin having the formula CF₂=CFO-[CF₂CF(CF₃)O]ₙCF₂CF₂CF₃ with n= 1, b) hexafluoropropylene oxide tetramer olefin having the formula CF₂-CFO-(CF₂CF(CF₃)O]ₙCF₂CF₂CF₃ with n=2, and c) mixtures thereof, ii) surfactant and iii) water to form an emulsified perfluorovinylpolyether, and
B) copolymerizing said emulsified perfluorovinylpolyether with at least one gaseous fluoromonomer selected from the group consisting of vinylidene fluoride and tetrafluoroethylene to form a fluoroelastomer having a glass transition temperature of less than-10 °C as determined by differential scanning calorimetry in heating mode with a heating rate of 10°C per minute, inflection point of transition.

2. A process of claim 1 wherein said emulsified perfluorovinylpolyether has a droplet size of less than 1 micron.

3. A process of claim 1 wherein said surfactant is a fluorosurfactant.

4. A process of claim 1 wherein said fluoroelastomer contains between 10 and 60 mole percent copolymerized units of said perfluorovinylpolyether.

5. A process of claim 4 wherein said fluoroelastomer contains between 20 and 50 mole percent copolymerized units of said perfluorovinylpolyether.

## Patentansprüche

1. Verfahren für die Herstellung eines Fluorelastomers, umfassend:
A) das Emulgieren einer Mischung, die i) einen Perfluorvinylpolyether ausgewählt aus der Gruppe bestehend aus a) Hexafluorpropylenoxidtrimerolefin, das die Formel CF₂=CFO-[CF₂CF(CF₃)O]ₙCF₂CF₂CF₃ aufweist, wobei n = 1 ist, b) Hexafluorpropylenoxidtetramerolefin, das die Formel CF₂=CFO-[CF₂CF(CF₃)O]ₙCF₂CF₂CF₃ aufweist, wobei n = 2 ist, und c) Mischungen derselben; ii) Tensid und iii) Wasser umfasst unter Bildung eines emulgierten Perfluorvinylpolyethers; und
B) das Copolymerisieren des emulgierten Perfluorvinylpolyethers mit mindestens einem gasförmigen Fluormonomer ausgewählt aus der Gruppe bestehend aus Vinylidenfluorid und Tetrafluorethylen unter Bildung eines Fluorelastomers, das eine Glasübergangstemperatur von weniger als - 10°C aufweist, wie durch Differential-Scanning-Kalorimetrie im Erhitzungsmodus mit einer Erhitzungsrate von 10°C pro Minute bestimmt, Umschlagwendepunkt.

2. Verfahren nach Anspruch 1, wobei der emulgierte Perfluorvinylpolyether eine Tröpfchengröße von weniger 1 Mikron aufweist.

3. Verfahren nach Anspruch 1, wobei das Tensid ein Fluortensid ist.

4. Verfahren nach Anspruch 1, wobei das Fluorelastomer 10 bis 60 Molprozent copolymerisierte Einheiten des Perfluorvinylpolyethers enthält.

5. Verfahren nach Anspruch 4, wobei das Fluorelastomer 20 bis 50 Molprozent copolymerisierte Einheiten des Perfluorvinylpolyethers enthält.

## Revendications

1. Procédé de préparation d'un fluoroélastomère consistant à:
A) émulsionner un mélange comprenant i) un perfluorovinylpolyéther choisi dans le groupe constitué de a) une oléfine qui est le trimère d'oxyde d'hexafluoropropylène ayant pour formule CF₂=CFO-[CF₂CF(CF₃)O]ₙCF₂CF₂CF₃ avec n = 1, b) une oléfine qui est le tétramère d'oxyde d'hexafluoropropylène ayant pour formule CF₂=CFO-[CF₂CF(CF₃)O]ₙCF₂CF₂CF₃ avec n = 2, et c) des mélanges des précédentes; ii) un tensioactif et iii) de l'eau pour former un perfluorovinylpolyéther émulsionné; et
B) faire copolymériser ledit perfluorovinylpolyéther émulsionné avec au moins un monomère fluoré gazeux choisi dans le groupe constitué du fluorure de vinylidène et du tétrafluoroéthylène pour former un fluoroélastomère ayant une température de transition vitreuse inférieure à -10°C, telle que déterminée par analyse calorimétrique différentielle (ACD) en mode chauffage avec une vitesse de montée en température de 10°C par minute, point d'inflexion de la transition.

2. Procédé selon la revendication 1 dans lequel ledit perfluorovinylpolyéther émulsionné a une taille de gouttelette inférieure à 1 micron.

3. Procédé selon la revendication 1 dans lequel ledit tensioactif est un tensioactif fluoré.

4. Procédé selon la revendication 1 dans lequel ledit fluoroélastomère contient entre 10 et 60% en moles de motifs copolymérisés dudit perfluorovinylpolyéther.

5. Procédé selon la revendication 4 dans lequel ledit fluoroélastomère contient entre 20 et 50% en moles de motifs copolymérisés dudit perfluorovinylpolyéther.
